# EUROPÄISCHE PATENTSCHRIFT

(11) **EP 3 661 621 B1**
(45) Veröffentlichungstag und Bekanntmachung des Hinweises auf die Patenterteilung: **26.05.2021**
(21) Anmeldenummer: 18753107.4
(22) Anmeldetag: 31.07.2018
(51) Int. Cl.: B01D 17/00, F02M 37/22, B01D 17/04

(54) **FILTERELEMENT**
FILTER ELEMENT
ÉLÉMENT FILTRANT

(30) Priorität: 01.08.2017 DE 102017007270
(43) Veröffentlichungstag der Anmeldung: 10.06.2020
(73) Patentinhaber: Hydac Fluidcarecenter GmbH, 66280 Sulzbach/Saar (DE)
(72) Erfinder: THEOBALD, Sascha, 66763 Dillingen (DE); SCHOLL, Thomas, 66740 Saarlouis (DE)
(74) Vertreter: Bartels und Partner, Patentanwälte
(86) Internationale Anmeldenummer: PCT/EP2018/070756
(87) Internationale Veröffentlichungsnummer: WO 2019/025450

(56) Entgegenhaltungen:
- EP-A1- 0 285 416
- EP-A2- 1 233 173
- DE-A1-102010 043 218
- DE-A1-102013 202 718
- DE-A1-102014 206 954
- DE-A1-102015 203 211
- DE-A1-102015 211 376

## Beschreibung

Die Erfindung betrifft ein Filterelement, insbesondere Dieselfilterelement, zum Abscheiden von Wasser aus Fluiden wie Dieselkraftstoff, mit den Merkmalen im Oberbegriff von Anspruch 1.

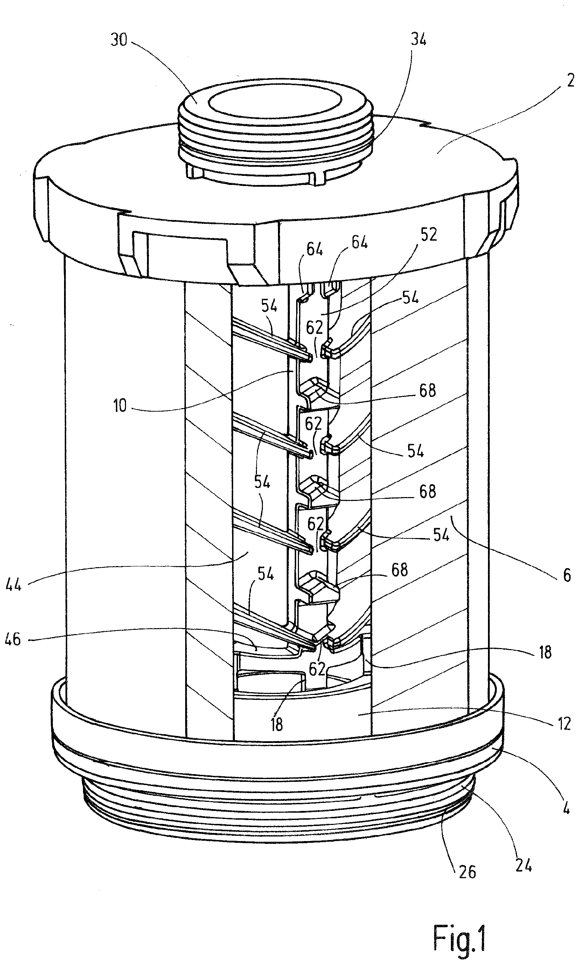

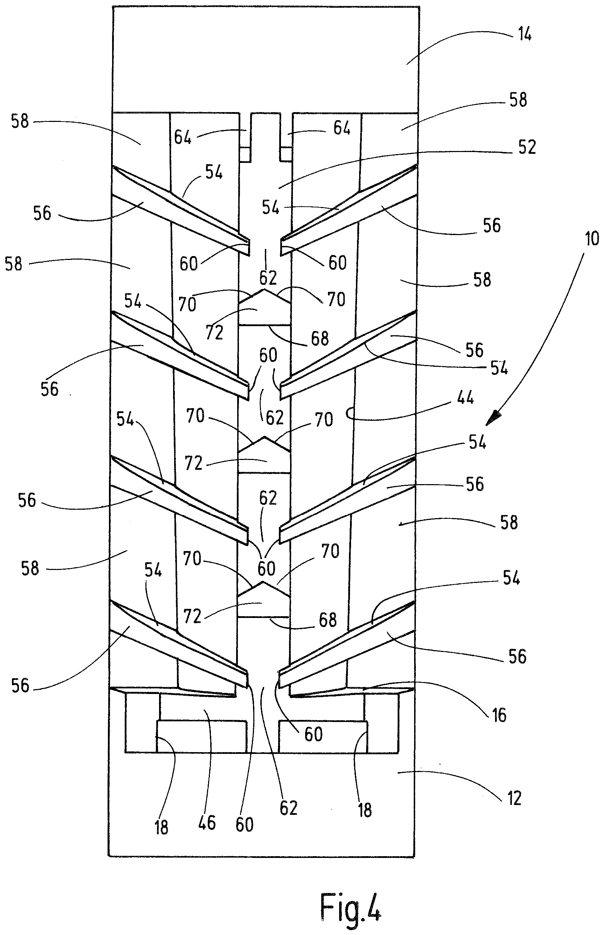

Filterelemente dieser Art sind Stand der Technik. Die Fig. 4 der DE 10 2011 119 868 A1 offenbart ein Filterelement, das für eine Filtervorrichtung für Dieselkraftstoff vorgesehen ist, wie es in Fig. 1 dieses genannten Dokumentes gezeigt ist. Wasserabscheidend wirkende Filterelemente kommen als wichtige Bestandteile insbesondere bei den in neuerer Zeit verbreiteten Common-Rail-Einspritzsystemen zum Einsatz, die als Hochdrucksysteme mit Drücken von 2500 Bar und mehr arbeiten. Bei derartigen Hochdrucksystemen wirken sich freie Wasseranteile neben anderen Verschmutzungen auf die Betriebssicherheit des Einspritzsystems besonders nachteilig aus. Bei dem genannten, bekannten Dieselfilterelement weist der einen Hohlzylinder bildende Filtermantel ein an der Innenseite des Hohlzylinders unmittelbar anliegendes Koaleszer-Filtermedium auf, das durch ein Spun-Spray-Fasermaterial gebildet ist. Als wasserabhaltende Barriere, die die vom Koaleszer-Filtermedium gebildeten Tropfen abfängt, ist ein hydrophobiertes Gewebe vorgesehen, das zwischen sich und dem Koaleszer-Medium eine Abscheidezone freilässt, in der die Wassertropfen absinken, und wie in dem erwähnten Dokument gezeigt, zu einem Wassersammelraum abfließen.

Die DE 10 2015 211 376 A1 und die DE 10 2015 203 211 A1 beschreiben jeweils ein Filterelement, insbesondere Dieselfilterelement, zum Abscheiden von Wasser aus Fluiden, wie Dieselkraftstoff, mit den Merkmalen im Oberbegriff von Anspruch 1 mit einem koaleszierend wirkenden Filtermantel, der bei der Filtration von außen nach innen durchströmt ist, und mit einer Barriere, die koaleszierte Wassertropfen abfängt und aus dem Filterelement abführt, wobei der Filtermantel sich innenumfangsseitig zumindest teilweise an einem Stützrohr abstützt und dass die Barriere durch eine Siebstruktur gebildet ist, die in das Stützrohr einstückig integriert ist, wobei das Stützrohr endseitig jeweils einen außenumfangsseitig zumindest teilweise geschlossenen Stützring aufweist und wobei sich zwischen den beiden Stützringen eine Stützstruktur mit der Siebstruktur erstreckt.

Weitere Filterelemente gehen aus der DE 10 2010 043 218 A1 und der DE 10 2013 202 718 A1 hervor.

Ausgehend von diesem Stand der Technik stellt sich die Erfindung die Aufgabe, ein Filterelement der eingangs genannten Gattung zur Verfügung zu stellen, das einfach und rationell herstellbar ist und sich durch ein besonders günstiges Betriebsverhalten auszeichnet.

Erfindungsgemäß ist diese Aufgabe durch ein Filterelement gelöst, das die Merkmale des Patentanspruches 1 in seiner Gesamtheit aufweist.

Demgemäß besteht eine wesentliche Besonderheit der Erfindung darin, dass die Stützstruktur als Teil der Ableiteinrichtung paarweise einander gegenüberliegende Führungsbahnen für den Wassertransport aufweist, die, ausgehend von einem höheren zu einem niedrigeren Niveau, mit einer vorgebbaren Bahnneigung führen, und dass an der Stelle des niedrigeren Niveaus die einander benachbart gegenüberliegenden Führungsbahnen einen Abgabespalt miteinander begrenzen.

Es ist ferner vorgesehen, dass der Filtermantel sich innenumfangsseitig zumindest teilweise an einem Stützrohr abstützt und dass die Barriere durch eine Siebstruktur gebildet ist, die in das Stützrohr einstückig integriert ist. Dadurch, dass dergestalt das Stützrohr nicht nur die Funktion der Abstützung des Filtermantels gegen die beim Filtervorgang wirkende Strömungskraft ausübt, sondern gleichzeitig als wasserabhaltende Barriere dient, ist ein vereinfachter Aufbau des Filterelementes realisierbar, was eine besonders rationelle und kostengünstige Herstellung ermöglicht. Während bei der genannten, bekannten Lösung lediglich das Koaleszer-Filtermedium des Filtermantels bei der Durchströmung des Filtermantels ein Stützelement als Ersatz eines an der Abströmseite des Filtermantels anliegenden Stützrohres bildet, ist der Filtermantel bei der Erfindung durch das Stützrohr, das gleichzeitig die Barriere bildet, im Filtrierbetrieb wirksam abgestützt, so dass sich das erfindungsgemäße Filterelement auch durch ein besonders günstiges, sicheres Betriebsverhalten auszeichnet.

Da das Stützrohr zusammen mit der Siebstruktur in einem Spritzgießvorgang aus Kunststoffmaterialien einstückig herstellbar ist, ist das erfindungsgemäße Filterelement für eine rationelle Fertigung in hohen Stückzahlen geeignet.

Bei vorteilhaften Ausführungsbeispielen der Erfindung ist die Anordnung so getroffen, dass für eine zweistufige Abscheidung aus dem das Filterelement durchströmenden Fluid der Filtermantel neben der Abreinigung von partikulären Verschmutzungen aus dem Fluid in diesem befindliches Wasser zu Tropfen koalesziert, die, von der Siebstruktur des Stützrohres abgefangen, mittels einer Ableiteinrichtung aus dem Filterelement abgeführt werden. Anders als bei der erwähnten, bekannten Lösung, bei der das koaleszierende Medium als zusätzliche, innenseitige Lage am Filtermantel vorgesehen ist, die auch als Stützelement wirkt, ist bei der Erfindung ein einheitlicher Filtermantel vorgesehen, der primär Partikel abscheidet und Wassertropfen koalesziert.

Bei vorteilhaften Ausführungsbeispielen bildet die Siebstruktur eine hydrophobe Sperrschicht aus, die vorzugsweise mit einem hydrophoben Wirkstoff beschichtet ist und eine Porosität aufweist, die den Durchlass des von Wasser im Wesentlichen befreiten Fluids in das Innere des Stützrohres ermöglicht.

Mit besonderem Vorteil ist der Filtermantel mehrlagig und plissiert ausgebildet. Wie üblich, kann es sich dabei um eine Aufeinanderschichtung von mehreren Lagen, beispielsweise gebildet aus Vlies- und Fasermaterialien sowie Einzelgeweben, handeln.

Das Stützrohr weist bei vorteilhaften Ausführungsbeispielen endseitig jeweils einen außenumfangsseitig zumindest teilweise geschlossenen Stützring auf, wobei sich zwischen den beiden Stützringen eine Stützstruktur mit der Siebstruktur erstreckt. Mit besonderem Vorteil kann die Anordnung hierbei derart getroffen sein, dass die Stützstruktur als Teil der Ableiteinrichtung paarweise aneinander gegenüberliegende Führungsbahnen für den Wassertransport aufweist, die, ausgehend von einem höheren zu einem niedrigeren Niveau, mit einer vorgebbaren Bahnneigung führen, wobei an der Stelle des niedrigeren Niveaus die einander benachbart gegenüberliegenden Führungsbahnen einen Abgabespalt miteinander begrenzen.

Zumindest bei einem Teil der paarweise einander zugeordneten Führungsbahnen kann in Richtung der Bahnneigung unterhalb des jeweils zuordenbaren Abgabespalts ein Verteiler als weiterer Teil der Ableiteinrichtung angeordnet sein, der die über den jeweiligen Abgabespalt abgegebene Wassermenge in Teilmengen aufteilt und an ein, in Richtung des Wasser- oder Tropfenflusses gesehen, nachfolgendes Paar von Führungsbahnen in Richtung auf deren freien Enden weiterleitet.

Die jeweiligen Verteiler können mit Vorteil eine Dachstruktur aufweisen, wobei die jeweils geneigten Dachflächen von den in Richtung des Wasser- oder Tropfenflusses darüberliegenden Führungsbahnen teilweise überdeckt sind.

Dabei kann die Anordnung so getroffen sein, dass die Verteiler jeweils einen gleichen axialen Abstand zu den darüber- und darunterliegenden Abgabespalten der Paare von Führungsbahnen aufweisen und innerhalb eines gemeinsamen Abgabekanals liegen, der bei aufrechter Position des Filterelements in senkrechter Richtung zwischen den Stützringen verläuft.

Hinsichtlich der Ausbildung der Ableiteinrichtung kann die Anordnung mit Vorteil so getroffen sein, dass der Abgabespalt des unterst liegenden Paares von Führungsbahnen in Richtung mindestens einer segmentförmigen Ausnehmung im unteren Stützring ausmündet, die von der Siebstruktur freigehalten eine wasserführende Verbindung zu einer Abgabeöffnung in einer unteren Endkappe des Filterelements frei lässt.

Oberhalb der jeweiligen segmentförmigen Ausnehmung im unteren Stützring ist das Stützrohr von einem Abschlussteil fluiddicht verschlossen. Durch das Abschlussteil ist eine Trennung zwischen dem im Inneren des Stützrohres befindlichen, wasserbefreiten Fluid und der Ableiteinrichtung gebildet.

Von dem Abschlussteil ausgehend ist das Innere des Stützrohres unter Bildung eines Hohlzylinders an eine Abgabeöffnung für das wasserbefreite Fluid angeschlossen, die sich in einer oberen Endkappe des Filterelements befindet.

Bei vorteilhaften Ausführungsbeispielen ist jedes Paar von Führungsbahnen mit der jeweils selben Niveaulage und derselben Bahnneigung zusammen mit den zuordenbaren Verteilern auf gegenüberliegenden Seiten des Stützrohres je einmal angeordnet, wobei für die Bildung des höheren Ausgangsniveaus einer jeden Führungsbahn dieses einstückig mit einem vertikal verlaufenden Stützsteg zwischen den Stützringen verbunden ist.

Bei einem sterngefaltete Lagen aufweisenden Filtermantel sind die jeweiligen Führungsbahnen und die Verteiler mit ihren Außenflächen in Anlage mit den innenliegenden Umlenkstellen des plissierten Filtermantels.

Die jeweiligen Führungsbahnen können zwischen sich fensterartige Durchlassräume für das wasserbefreite Fluid begrenzen, die von der Siebstruktur abgedeckt sind.

Ferner kann der obere Stützring des Stützrohres mindestens ein Paar von Abstandsteilen aufweisen, die sich an seinem inneren Umfang mit ihrem jeweils bogenförmigen Verlauf an zuordenbaren Vorsprüngen an der oberen Endkappe abstützen.

Zur Bildung von Anschlüssen an der Abgabeöffnung für wasserbefreites Fluid und an einer unten liegenden Abgabeöffnung für abgeschiedenes Wasser kann die jeweilige Endkappe, von der Elementaufnahme für den Filtermantel vorstehend, jeweils einen Anschlussstutzen aufweisen, die außenumfangsseitig eine Dichteinrichtung, vorzugsweise in Form eines O-Dichtringes tragen.

Nachstehend ist die Erfindung anhand eines in der Zeichnung dargestellten Ausführungsbeispieles im Einzelnen erläutert. Es zeigen:
- Fig. 1: eine perspektivische Schrägansicht des Ausführungsbeispiels des erfindungsgemäßen Filterelements, wobei der Außenmantel auf einem Teilbereich mit vertikaler Schnittebene aufgeschnitten dargestellt ist;
- Fig 2: einen Längsschnitt des Ausführungsbeispieles;
- Fig. 3: eine gegenüber Fig. 1 und 2 vergrößert gezeichnete perspektivische Schrägansicht des gesondert dargestellten Stützrohres des Ausführungsbeispieles; und
- Fig. 4: eine Vorderansicht des gesondert dargestellten Stützrohres.

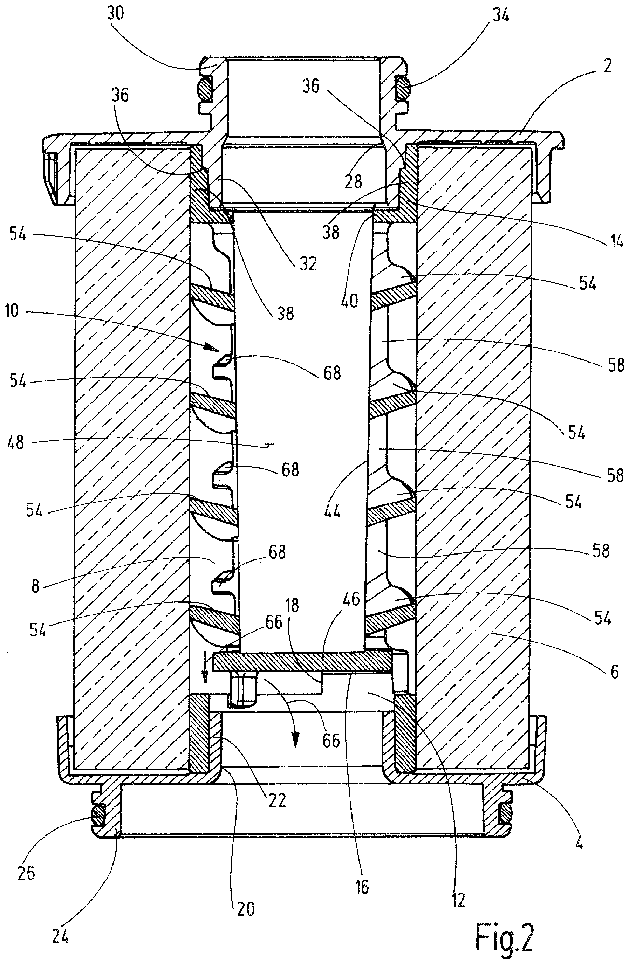

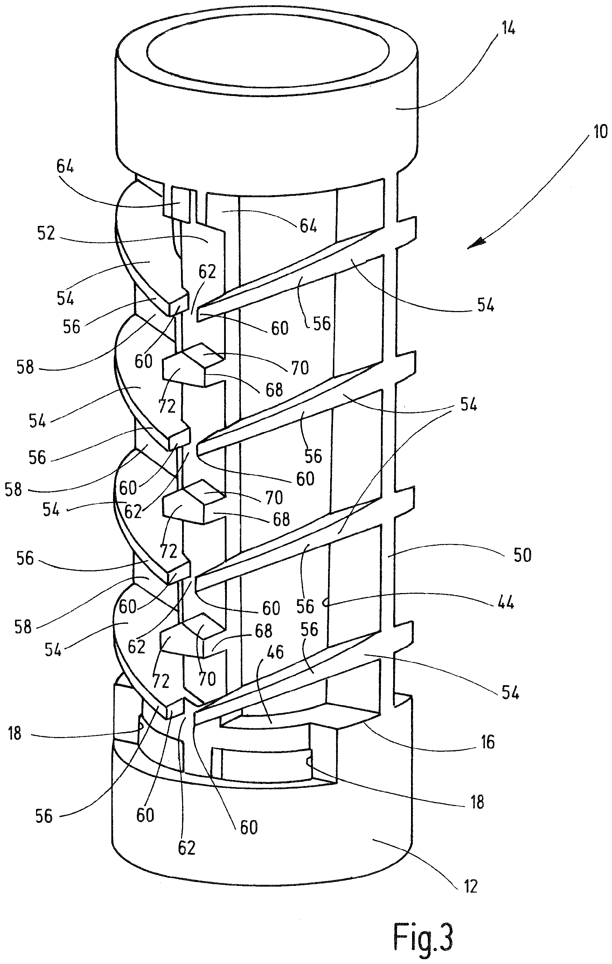

In den Fig. 1 und 2, in denen das Filterelement zur Gänze dargestellt ist, sind eine obere Endkappe mit 2 und eine untere Endkappe mit 4 bezeichnet, die in der üblichen Weise die Einfassung für einen Filtermantel 6 in Form eines Hohlzylinders bilden. Beim Filtrationsbetrieb, bei dem der Filtermantel 6 von seiner Außenseite her zum inneren Filterhohlraum 8 (Fig. 2) hin durchströmt ist, ist der Filtermantel 6 mit seiner Innenseite an einem in den Fig. 3 und 4 gesondert dargestellten Stützrohr 10 abgestützt. Der Filtermantel 6 ist in der bei Filterelementen üblichen Weise aus mehreren Filterlagen aufgebaut, die sterngefaltet aneinander liegen und in bekannter Weise Vorfilter- und Hauptfilterlagen ausbilden. Um dem Filtermantel 6 neben der Solidpartikel rückhaltenden Eigenschaft eine koaleszierende Wirkung zu verleihen, ist in den Lagenverbund zumindest eine ein Koaleszer-Medium bildende Lage mit eingefaltet. Diese kann aus einem Material gebildet sein, wie es in DE 10 2014 000 903 A1 beschrieben ist. Wie dort gezeigt, handelt es sich bevorzugt um ein Vlies, das einen Porengrößengradienten aufweist, der so gerichtet ist, dass in der Durchströmungsrichtung, von einer Feinstruktur ausgehend, die Porengrößen zusehends in eine Grostruktur übergehen. Zur Bildung der unterschiedlichen Porengrößen kann die koaleszierende Lage mehrschichtig aufgebaut sein, wobei einer Grundschicht eine Mittelschicht nachgeordnet ist, die aus in die Grundschicht eingewebten Polyesterfasern gebildet ist und an die sich eine weitere Schicht größerer Poren anschließt.

Das Stützrohr 10 ist durch einen Spritzgießvorgang aus Kunststoff als einstückiger Baukörper hergestellt, der aus einer äußeren Stützstruktur und einer inneren Siebstruktur besteht. Die Stützstruktur weist einen das untere Ende bildenden, kreisrunden unteren Stützring 12 und einen das obere Ende der Struktur bildenden oberen kreisrunden Stützring 14 auf, die beide den gleichen Außendurchmesser besitzen. Die äußere Zylindermantelfläche des oberen Stützringes 14 weist keine Unterbrechungen auf, während der untere Stützring 12, anschließend an seinen oberen Rand 16, zwei segmentförmige Ausnehmungen 18 aufweist, die an zueinander diametral gegenüberliegenden Seiten des unteren Stützringes 12 ausgebildet und in der Zeichnung daher nur teilweise sichtbar sind. Wie die Fig. 2 zeigt, ist das untere Ende des Filtermantels 6 zusammen mit dem unteren Stützring 12 in der unteren Endkappe 4 aufgenommen, die in üblicher Weise die endseitige äußere Einfassung des Filtermantels 6 bildet und einen eine zentrale Öffnung 20 umgebenden, nach oben vorspringenden Stutzen 22 aufweist. Wie Fig. 2 zeigt, bildet der Stutzen 22 mit seiner Außenseite die Aufnahme für den unteren Stützring 12, an dessen Außenseite der Filtermantel 6 anliegt. Zur zentralen Öffnung 20 radial nach außen versetzt, weist die untere Endkappe 4 außer dem nach innen vorstehenden Stutzen 22 einen nach außen vorstehenden Anschlussstutzen 24 auf, der zur Bildung einer zu einem (nicht gezeigten) Wassersammelraum führenden Anschlussverbindung dient, wobei die Anschlussverbindung durch einen O-Ring 26 am Anschlussstutzen 24 abgedichtet ist.

Die obere Endkappe 2 weist in ähnlicher Weise wie die untere Endkappe 4 an einer zentralen Öffnung 28 einen nach oben und außen vorstehenden Anschlussstutzen 30 sowie einen nach unten vorspringenden Innenstutzen 32 auf. Der Anschlussstutzen 30, über den bei der Filtration das wasserbefreite Fluid ausströmt, weist zur Abdichtung der Anschlussverbindung einen O-Ring 34 auf. Wie ebenfalls der Fig. 2 entnehmbar ist, ist der Innenstutzen 32 der oberen Endkappe 2 außenseitig so gestuft, dass Vorsprünge 36 gebildet sind, an denen sich der obere Stützring 14 mit an seiner Innenseite paarweise ausgebildeten Abstandsteilen 38 abstützt.

Zwischen dem Innenrand 40 des oberen Stützringes 14 und einem Abschlussteil 46 am oberen Ende des unteren Stützringes 12 erstreckt sich eine Siebstruktur in Form eines Siebrohres 44. Dieses ist zur Bildung einer wasserabfangenden Barriere mit einem hydrophoben Wirkstoff beschichtet und weist eine Porosität auf, die den Durchlass des von Wasser im Wesentlichen befreiten Fluids in den von dem Siebrohr 44 umgebenen inneren Hohlraum 48 ermöglicht. Durch das Abschlussteil 46 ist der Hohlraum 48 nach unten geschlossen, jedoch für den Abstrom des wasserbefreiten Fluids nach oben hin zum Anschlussstutzen 30 der oberen Endkappe 2 offen.

Neben dem Siebrohr 44 weist die zwischen den Stützringen 12 und 14 verlaufende Stützstruktur ein Paar vertikaler, einander gegenüberliegender Stützstege 50 und ein Paar vertikaler, einander gegenüberliegender Ableitstege 52 auf. Diese Stege 50, 52 bilden zusammen mit paarweise einander gegenüberliegenden Führungsbahnen 54 Bestandteil einer Ableiteinrichtung für die Abfuhr von vom Siebrohr 44 abgefangenem Wasser. Die Führungsbahnen 54 jedes der vier vorhandenen Paare sind gleich ausgebildet, sind in gleichen axialen Abständen voneinander angeordnet und haben die Form eines Plattenteiles mit einer kreisbogenförmigen Außenfläche 56, die Teil einer Zylindermantelfläche bildet, die die kreiszylindrische Außenkontur der Stützringe 12, 14 unter Freilassen dazwischenliegender, fensterartiger Durchlassräume 58 fortsetzt. Die Außenflächen 56 der Führungsbahnen 54, zusammen mit den Außenseiten der Stützringe 12 und 14 bilden so die Anlagefläche für die Innenseite des Filtermantels 6. Die Führungsbahnen 54 verlaufen mit gleichartiger Neigung, ausgehend vom Stützsteg 50, der die Stelle des höchsten Niveaus jeder Führungsbahn 54 bildet, schräg nach unten, wo ihre Enden 60 einen Wasser-Abgabespalt 62 zwischen sich frei lassen. Der Abgabespalt 62 ist auf die Mitte des zugeordneten Ableitsteges 52 ausgerichtet. Wie die Fig. 3 für die Verbindung der Ableitstege 52 mit dem oberen Stützring 14 zeigt, sind die oberen Enden der betreffenden Ableitstege 52 mit dem betreffenden Stützring 12, 14 über sich in Radialrichtung erstreckende Verbindungsplatten 64 derart in Verbindung, dass der jeweilige Ableitsteg 52 gegenüber dem Außenumfang der Stützringe 12, 14 radial nach Innen versetzt ist. Der jeweilige Ableitsteg 52 bildet dadurch einen vertieften Abgabekanal.

Unterhalb des Abgabespaltes 62 jedes Paares von Führungsbahnen 54 ist ein Verteiler angeordnet, der die vom darüberliegenden Abgabespalt 62 kommende Wassermenge in Teilmengen aufteilt, die über den jeweils darunterliegenden Abgabespalt 62 zum jeweils darunterliegenden Verteiler gelangen und von dort zum Abgabespalt 62 des untersten Paares Führungsbahnen 54 abfließen, von wo sie über die Ausnehmungen 18 ins Innere des unteren Stützringes 12 und damit zur Öffnung 20 der unteren Endkappe 4 gelangen, siehe Strömungspfeile 66 in Fig. 2. Die Verteiler sind jeweils durch einen von dem Ableitsteg 52 vorspringenden Leitkörper 68 gebildet, die gleich ausgebildet sind und zwei geneigte, obere Dachflächen 70 sowie eine radial außenliegende Stirnfläche 72 besitzen, wobei die Breite der Leitkörper 68 der Breite des Ableitsteges 52 entspricht. Die Leitkörper 68 weisen jeweils einen gleichen axialen Abstand zu den darüber- und darunterliegenden Abgabespalten 62 der Paare der Führungsbahnen 54 auf. Die Stirnflächen 72 der Leitkörper 68 bilden jeweils Teil einer Zylindermantelfläche, die die Mantelfläche der Stützringe 12 und 14 und der Außenflächen 56 der Führungsbahnen 54 fortsetzt und daher, wie diese Mantelflächen und Teilmantelflächen die Abstützfläche für den anliegenden Filtermantel 6 bilden. Wie in Fig. 2 mit den Strömungspfeilen 66 verdeutlicht, gelangen im Betrieb die an der Abströmseite des Filtermantels 6 gebildeten Tropfen, die über die Leitkörper 68 nach unten absinken, durch die Ausnehmungen 18 im unteren Stützring 12 in dessen Innenraum, von wo sie über den Stutzen 22 an der Öffnung 20 der unteren Endkappe 4 das Filterelement verlassen.

## Patentansprüche

1. Filterelement, insbesondere Dieselfilterelement, zum Abscheiden von Wasser aus Fluiden, wie Dieselkraftstoff, mit einem koaleszierend wirkenden Filtermantel (6), der bei der Filtration von außen nach innen durchströmt ist, und mit einer Barriere (44), die koaleszierte Wassertropfen abfängt und aus dem Filterelement abführt, wobei der Filtermantel (6) sich innenumfangsseitig zumindest teilweise an einem Stützrohr (10) abstützt und dass die Barriere durch eine Siebstruktur (44) gebildet ist, die in das Stützrohr (10) einstückig integriert ist, wobei das Stützrohr (10) endseitig jeweils einen außenumfangsseitig zumindest teilweise geschlossenen Stützring (12, 14) aufweist und wobei sich zwischen den beiden Stützringen (12, 14) eine Stützstruktur (50, 52, 54) mit der Siebstruktur (44) erstreckt, **dadurch gekennzeichnet, dass** die Stützstruktur (50, 52, 54) als Teil der Ableiteinrichtung paarweise einander gegenüberliegende Führungsbahnen (54) für den Wassertransport aufweist, die, ausgehend von einem höheren zu einem niedrigeren Niveau, mit einer vorgebbaren Bahnneigung führen, und dass an der Stelle des niedrigeren Niveaus die einander benachbart gegenüberliegenden Führungsbahnen (54) einen Abgabespalt (62) miteinander begrenzen.

2. Filterelement nach Anspruch 1, **dadurch gekennzeichnet, dass** das Stützrohr (10) zusammen mit der Siebstruktur (44) in einem Spritzgießvorgang aus Kunststoffmaterialien einstückig herstellbar ist.

3. Filterelement nach Anspruch 1 oder 2, **dadurch gekennzeichnet, dass** für eine zweistufige Abscheidung aus dem das Filterelement durchströmenden Fluid der Filtermantel (6) neben der Abreinigung von partikulären Verschmutzungen aus dem Fluid in diesem befindliches Wasser zu Tropfen koalesziert, die, von der Siebstruktur (44) des Stützrohres (10) abgefangen, mittels einer Ableiteinrichtung (54, 62, 68) aus dem Filterelement abgeführt werden.

4. Filterelement nach einem der vorstehenden Ansprüche, **dadurch gekennzeichnet, dass** die Siebstruktur (44) eine hydrophobe Sperrschicht ausbildet, vorzugsweise mit einem hydrophoben Wirkstoff beschichtet ist, und eine Porosität aufweist, die den Durchlass des von Wasser im Wesentlichen befreiten Fluids in das Innere (48) des Stützrohres (10) ermöglicht.

5. Filterelement nach einem der vorstehenden Ansprüche, **dadurch gekennzeichnet, dass** der Filtermantel (6) mehrlagig und plissiert ausgebildet ist.

6. Filterelement nach einem der vorstehenden Ansprüche, **dadurch gekennzeichnet, dass** zumindest bei einem Teil der paarweise einander zugeordneten Führungsbahnen (54) in Richtung der Bahnneigung unterhalb des jeweils zuordenbaren Abgabespalts (62) ein Verteiler (68) als weiterer Teil der Ableiteinrichtung (54, 62, 68) angeordnet ist, der die über den jeweiligen Abgabespalt (62) abgegebene Wassermenge in Teilmengen aufteilt und an ein, in Richtung des Wasser- oder Tropfenflusses gesehen, nachfolgendes Paar von Führungsbahnen (54) in Richtung auf deren freien Enden (60) weiterleitet.

7. Filterelement nach Anspruch 6, **dadurch gekennzeichnet, dass** der jeweilige Verteiler (68) eine Dachstruktur aufweist und dass die jeweils geneigten Dachflächen (70) von den in Richtung des Wasser- oder Tropfenflusses darüberliegenden Führungsbahnen (54) teilweise überdeckt sind.

8. Filterelement nach Anspruch 6 oder 7, **dadurch gekennzeichnet, dass** die Verteiler (68) jeweils einen gleichen axialen Abstand zu den darüber- und darunterliegenden Abgabespalten (62) der Paare von Führungsbahnen (54) aufweisen und innerhalb eines gemeinsamen Abgabekanals (52) liegen, der bei aufrechter Position des Filterelements in senkrechter Richtung zwischen den Stützringen (12, 14) verläuft.

9. Filterelement nach einem der Ansprüche 6 bis 8, **dadurch gekennzeichnet, dass** der Abgabespalt (62) des zuunterst liegenden Paares von Führungsbahnen (54) in Richtung mindestens einer segmentförmigen Ausnehmung (18) im unteren Stützring (12) ausmündet, die von der Siebstruktur (44) freigehalten eine wasserführende Verbindung zu einer Abgabeöffnung (20) in einer unteren Endkappe (44) freilässt.

10. Filterelement nach Anspruch 9, **dadurch gekennzeichnet, dass** oberhalb der jeweiligen segmentförmigen Ausnehmung (18) im unteren Stützring (12) das Stützrohr (10) von einem Abschlussteil (46) fluiddicht verschlossen ist.

11. Filterelement nach Anspruch 10, **dadurch gekennzeichnet, dass**, ausgehend von dem Abschlussteil (46), das Innere (48) des Stützrohres (10) unter Bildung eines Hohlzylinders an eine Abgabeöffnung für ein wasserbefreites Fluid in einer oberen Endkappe (2) fluidführend angeschlossen ist.

12. Filterelement nach einem der Ansprüche 6 bis 11, **dadurch gekennzeichnet, dass** jedes Paar von Führungsbahnen (54) mit der jeweils selben Niveaulage und derselben Bahnneigung zusammen mit den zuordenbaren Verteilern (68) auf gegenüberliegenden Seiten des Stützrohres (10) je einmal angeordnet ist und dass für die Bildung des höheren Ausgangsniveaus einer jeden Führungsbahn (54) diese einstückig mit einem vertikal verlaufenden Stützsteg (50) zwischen den Stützringen (12, 14) verbunden ist.

13. Filterelement nach einem der Ansprüche 6 bis 12, **dadurch gekennzeichnet, dass** die jeweiligen Führungsbahnen (54) und die Verteiler (68) mit ihren Außenflächen (56, 72) in Anlage sind mit den innenliegenden Umlenkstellen des plissierten Filtermantels (6).

14. Filterelement nach einem der vorstehenden Ansprüche, **dadurch gekennzeichnet, dass** die jeweiligen Führungsbahnen (54) zwischen sich fensterartige Durchlassräume (58) für das von Wasser befreite Fluid begrenzen, die von der Siebstruktur (44) abgedeckt sind.

15. Filterelement nach einem der vorstehenden Ansprüche, **dadurch gekennzeichnet, dass** der obere Stützring (14) des Stützrohres (10) mindestens ein Paar von Abstandsteilen (38) aufweist, die an seinem inneren Umfang mit ihrem jeweils bogenförmigen Verlauf sich an zuordenbaren Vorsprüngen (36) an der oberen Endkappe (2) abstützen.

16. Filterelement nach einem der vorstehenden Ansprüche, **dadurch gekennzeichnet, dass** die jeweilige Endkappe (2, 4), von der Elementaufnahme für den Filtermantel (6) vorstehend, jeweils einen Anschlussstutzen (22, 32) aufweist, die außenumfangsseitig eine Dichteinrichtung, vorzugsweise in Form eines O-Dichtringes (26, 34), tragen.

## Claims

1. Filter element, particularly a diesel filter element, for separating water from fluids such as diesel fuel, with a filter casing (6) with a coalescing action, through which the flow passes from the outside to the inside during filtration, and with a barrier (44) that traps the coalesced water droplets and discharges them from the filter element, the filter casing (6) being supported, on its inner circumference, at least partially on a support tube (10) and the barrier being formed by a screen structure (44), which forms an integral part of the support tube (10), the ends of said support tube (10) each comprising a support ring (12, 14), which is at least partially closed on its outer circumference, and a support structure (50, 52, 54), with the screen structure (44), extending between the two support rings (12, 14), **characterised in that** the support structure (50, 52, 54) comprises guideways (54) arranged opposite one another in pairs for transporting water, which lead with a pre-definable guideway incline, moving from a higher to a lower level, and **in that** the guideways (54) adjacent to and opposite one another together delimit a discharge slot (62) in the region of the lower level.

2. Filter element according to claim 1, **characterised in that** the support tube (10), together with the screen structure (44), can be manufactured in one piece from plastics materials in an injection moulding process.

3. Filter element according to either claim 1 or claim 2, **characterised in that**, for a two-stage separation from the fluid flowing through the filter element, the filter casing (6), in addition to cleaning particulate impurities from the fluid, coalesces the water contained therein to form droplets which are trapped by the screen structure (44) of the support tube (10) and discharged from the filter element by means of a discharge apparatus (54, 62, 68).

4. Filter element according to any one of the preceding claims, **characterised in that** the screen structure (44) forms a hydrophobic barrier layer, is preferably coated with a hydrophobic active substance and has appropriate porosity to allow the fluid substantially freed from the water to pass through into the inside (48) of the support tube (10).

5. Filter element according to any one of the preceding claims, **characterised in that** the filter casing (6) is formed such that it has multiple layers and is pleated.

6. Filter element according to any one of the preceding claims, **characterised in that**, in the case of at least some of the guideways (54) arranged in pairs in relation to one another, a manifold (68) is arranged as a further part of the discharge apparatus (54, 62, 68) in the direction of the guideway incline beneath the discharge slot (62) that can be assigned in each case, said manifold dividing the volume of water discharged via the respective discharge slot (62) into partial volumes and passing these on to a subsequent pair of guideways (54), as viewed in the direction of the water or droplet flow, in the direction of their free ends (60).

7. Filter element according to claim 6, **characterised in that** the respective manifold (68) has a roof structure and **in that** the respective inclined roof surfaces (70) are partially covered by the guideways (54) located above them in the direction of the water or droplet flow.

8. Filter element according to either claim 6 or claim 7, **characterised in that** the manifolds (68) are each the same axial distance from the discharge slots (62) of the pairs of guideways (54) located above and below them and lie within a common discharge channel (52), which runs in a vertical direction between the support rings (12, 14) when the filter element is in an upright position.

9. Filter element according to any one of claims 6 to 8, **characterised in that** the discharge slot (62) of the lowermost pair of guideways (54) emerges in the direction of at least one segment-shaped recess (18) in the lower support ring (12), said recess, when left clear by the screen structure (44), releasing a water-conducting connection to a discharge opening (20) in a lower end cap (44).

10. Filter element according to claim 9, **characterised in that**, above the respective segment-shaped recess (18) in the lower support ring (12), the support tube (10) is sealed in a fluid-tight manner by an end part (46).

11. Filter element according to claim 10, **characterised in that**, starting from the end part (46), the inside (48) of the support tube (10) is connected in a fluid-conducting manner to a discharge opening for a fluid from which water has been removed in an upper end cap (2) such that it forms a hollow cylinder.

12. Filter element according to any one of claims 6 to 11, **characterised in that** each pair of guideways (54) with the respective same level position and the same guideway incline, together with the manifolds (68) that can be assigned, is in each individual case arranged on opposite sides of the support tube (10) and **in that** each of these is connected in one piece to a vertically extending support web (50) between the support rings (12, 14) to form the upper starting level of each guideway (54).

13. Filter element according to any one of claims 6 to 12, **characterised in that** the respective guideways (54) and the manifolds (68), with their outer surfaces (56, 72), are in contact with the internal fold points of the pleated filter casing (6).

14. Filter element according to any one of the preceding claims, **characterised in that** window-like passage areas (58) for the fluid from which water has been removed are delimited between the respective guideways (54), said areas being covered by the screen structure (44).

15. Filter element according to any one of the preceding claims, **characterised in that** the upper support ring (14) of the support tube (10) comprises at least one pair of spacer parts (38), which are supported, on the inner circumference of said ring with their respective curved profile, on assignable protrusions (36) on the upper end cap (2).

16. Filter element according to any one of the preceding claims, **characterised in that** the respective end cap (2, 4), protruding from the element holders for the filter casing (6), in each case comprises a connection nozzle (22, 32) carrying a sealing device, preferably in the form of an O-ring gasket (26, 34) on its outer circumference.

## Revendications

1. Elément de filtre, notamment élément de filtre diesel, pour séparer de l'eau de fluides, comme du carburant diesel, comprenant une enveloppe (6) de filtre à effet de coalescence qui, lors de la filtration, est traversée de l'extérieur vers l'intérieur, et comprenant une barrière (44) qui recueille des gouttes d'eau ayant subi la coalescence et les évacue de l'élément de filtre, dans lequel l'enveloppe (6) de filtre s'appuie du côté du pourtour intérieur au moins en partie sur un tuyau (10) d'appui et en ce que la barrière est formée par une structure (44) de tamis qui est intégrée d'une seule pièce dans le tuyau (10) d'appui, dans lequel le tuyau (10) d'appui a du côté de l'extrémité, respectivement, un anneau (12, 14) d'appui fermé au moins en partie du côté du pourtour extérieur et dans lequel, entre les deux anneaux (12, 14) d'appui, s'étend une structure (50, 52, 54) d'appui ayant la structure (44) de tamis, **caractérisé en ce que** la structure (50, 52, 54) d'appui a, comme partie du dispositif d'évacuation pour le transport de l'eau, des voies (54) de guidage opposées les unes aux autres par paires qui, en partant d'un niveau plus haut à un niveau plus bas, guident en ayant une inclinaison de voie pouvant être donnée à l'avance et **en ce que**, à l'emplacement du niveau plus bas, les voies (54) de guidage, opposées l'une à l'autre en étant voisines, délimitent entre elles un intervalle (62) de distribution.

2. Elément de filtre suivant la revendication 1, **caractérisé en ce que** le tuyau (10) d'appui, ensemble avec la structure (44) de tamis, peut être fabriqué d'une seule pièce en matière plastique dans une opération d'injection.

3. Elément de filtre suivant la revendication 1 ou 2, **caractérisé en ce que**, pour un dépôt en deux stades à partir du fluide passant à travers l'élément de filtre, l'enveloppe (6) de filtre, outre l'élimination par nettoyage de pollutions en particules du fluide, effectue une coalescence de l'eau se trouvant dans celui-ci en gouttes qui, recueillies par la structure (4) de tamis du tuyau (10) d'appui, sont évacuées de l'élément de filtre au moyen du dispositif (54, 62, 68) d'évacuation.

4. Elément de filtre suivant l'une des revendications précédentes, **caractérisé en ce que** la structure (44) de tamis constitue une couche d'arrêt hydrophobe, revêtue de préférence d'une substance active hydrophobe, et a une porosité, qui permet le passage du fluide sensiblement débarrassé d'eau à l'intérieur (48) du tuyau (10) d'appui.

5. Elément de filtre suivant l'une des revendications précédentes, **caractérisé en ce que** l'enveloppe (6) du filtre est constituée en plusieurs couches et en étant plissée.

6. Elément de filtre suivant l'une des revendications précédentes, **caractérisé en ce qu'**au moins pour une partie des voies (54) de guidage associées les unes aux autres par paires est monté, dans la direction de l'inclinaison de voie en-dessous de l'intervalle (62) de distribution pouvant être associé respectivement, un répartiteur (68) comme autre partie du dispositif (54, 62, 68) d'évacuation, répartiteur qui répartit en quantités partielles la quantité d'eau distribuée par la fente (62) de distribution respective et l'achemine à une paire suivante, considérée dans la direction du flux d'eau des gouttes, de voies (54) de guidage dans la direction de leurs extrémités (60) libres.

7. Elément de filtre suivant la revendication 6, **caractérisé en ce que** le répartiteur (68) respectif a une structure en toit et **en ce que** les surfaces (70) de toit inclinées respectivement sont recouvertes en partie par des voies (54) de guidage se trouvant au-dessus dans la direction du flux d'eau ou de gouttes.

8. Elément de filtre suivant la revendication 6 ou 7, **caractérisé en ce que** les répartiteurs (68) ont chacun une même distance axiale aux fentes (62) de distribution se trouvant au-dessus et en-dessous des paires de voies (54) de guidage et se trouvent dans un conduit (52) de distribution commun, qui, lorsque l'élément de filtre est en position debout, s'étend dans la direction perpendiculaire entre les anneaux (12, 14) d'appui.

9. Elément de filtre suivant l'une des revendications 6 à 8, **caractérisé en ce que** la fente (62) de distribution de la paire se trouvant le plus en-dessous des voies (54) de guidage débouche dans la direction d'au moins un évidement (78) en forme de segment de l'anneau (12) d'appui inférieur, qui dégage, dans une coiffe (44) d'extrémité inférieure, en étant maintenu libre de la structure (44) de tamis, une liaison conduisant de l'eau à une ouverture (20) de distribution.

10. Elément de filtre suivant la revendication 9, **caractérisé en ce que**, au-dessus de l'évidement (18) respectif en forme de segment de l'anneau (12) d'appui inférieur, le tuyau (10) d'appui est fermé d'une manière étanche au fluide par une partie (46) de fermeture.

11. Elément de filtre suivant la revendication 10, **caractérisé en ce que**, à partir de la partie (46) de fermeture, l'intérieur (48) du tuyau (10) d'appui est raccordé fluidiquement en formant un cylindre creux à une ouverture de distribution d'un fluide débarrassé d'eau dans une coiffe d'extrémité supérieure.

12. Elément de filtre suivant l'une des revendications 6 à 11, **caractérisé en ce que** chaque paire de voies (54) de guidage, ayant la même position en niveau et la même inclinaison de voie, est disposée, ensemble avec les répartiteurs (68) pouvant être associés, sur des côtés opposés du tuyau (10) d'appui, respectivement une fois, et **en ce que**, pour la formation du niveau de sortie plus haut de chaque voie (54) de guidage, celle-ci est reliée d'une pièce avec une entretoise (50) d'appui s'étendant verticalement entre les anneaux (12, 14) d'appui.

13. Elément de filtre suivant l'une des revendications 6 à 12, **caractérisé en ce que** les voies (54) de guidage respectives et les répartiteurs (68) sont en contact par leurs surfaces (56, 72) extérieures avec les points de renvoi se trouvant vers l'intérieur de l'enveloppe (6) de filtre plissé.

14. Elément de filtre suivant l'une des revendications précédentes, **caractérisé en ce que** les voies (54) de guidage respectives délimitent entre elles des espaces (58) de passage de type en fenêtre pour le fluide débarrassé de l'eau, espaces qui sont recouverts de la structure (44) de tamis.

15. Elément de filtre suivant l'une des revendications précédentes, **caractérisé en ce que** l'anneau (14) d'appui supérieur du tuyau (10) d'appui a au moins une paire de parties (38) de mise à distance, qui s'appuient sur un pourtour intérieur par leur tracé en forme d'arceau sur des saillies (36) pouvant être associées à la coiffe (2) d'extrémité supérieure.

16. Elément de filtre suivant l'une des revendications précédentes, **caractérisé en ce que** la coiffe (2, 4) d'extrémité respective a, en saillie du logement d'élément de l'enveloppe (6) de filtre, respectivement une tubulure (22, 32) de raccordement, qui porte un dispositif d'étanchéité du côté du pourtour extérieur, de préférence sous la forme d'un joint (26, 34) torique.
